# EUROPEAN PATENT APPLICATION

(11) **EP 1 818 171 A1**
(43) Date of publication of application: **15.08.2007**
(21) Application number: 06101442.9
(22) Date of filing: 09.02.2006
(51) Int. Cl.: B32B 27/32

(54) **Printable laminates, process for its manufacture and printing process**

(71) Applicant: SOLVAY INDUSTRIAL FOILS MANAGEMENT AND RESEARCH, 1050 Bruxelles (BE)
(72) Inventor: PIERNOT, Olivier, 1200, BRUSSELS (BE)
(74) Representative: Patentanwälte Zellentin & Partner

(57) **Abstract**

A printable laminate comprising
(a) a base layer comprising at least one polymer;
(b) a surface layer comprising an ethylene copolymer (b1) containing 1 to 50 % by weight based on the ethylene copolymer, of one or more polar repeating units which are derived from ethylenically unsaturated monomers selected from the group consisting of carboxylic acid esters, carboxylic acids, carboxylic acid anhydrides, carboxylic acid salts, and epoxy compounds ;
and optionally
(c) an adhesive layer between the base layer (a) and the surface layer (b) ; wherein at least one of layers (a), (b), (c) comprises a polymer (b2) which is grafted with at least one unsaturated carboxylic acid, unsaturated sulfonic acid and/or unsaturated carboxylic acid anhydride, and/or their salts, a process for its production and a printing process which makes use of the laminate.

## Description

The invention relates to printable laminates, which are printable in particular by digital printing techniques such as electrophotography, a process for manufacturing the printable laminates and a printing process.

In the past years, so-called « contactless » printing techniques, where there is no contact between the printing head and the substrate, for example the electrophotography technique has been developed. The technique is used in digital printers and makes use of inks which are entirely different from those used in conventional printing techniques and which are generally described as toners. In general, the inks used in electrophotography contain less than 50 weight % solvent. In the case of the Indigo^{®}- printing process, the ink used is entirely different, because it is composed of pigments which are encapsulated in a polymer shell. This « core-shell » - structure is dispersed in a diluting solvent with a high boiling point (~150°C) with the aid of surface active ingredients.

In order to have a good imprintability it is necessary that 1) the ink is transferred totally to the film, and 2) that the adhesion between ink and substrate is good.

If an attempt is made to print a polyolefin film by electrophotography, whether using dry or liquid inks and even after corona treatment, very poor results are obtained in the sense that there is virtually no adhesion of the toner to the film. In order to print correctly, such a film requires the application of a coating on the surface. To this end coatings on the basis of polyamide, of ionomers, and of polyethylene terephtalate have been known.

US 2004/0151881 A1 discloses a substrate suitable for printing a toner image thereon, comprising : printing media; an overlayer coating, having an outer surface to which a toner image can be fused and fixed, the overlayer coating comprising an overlay polymer chosen from the group consisting of ethylene acrylic acid copolymer, polyvinyl pyridine and styrene butadiene copolymer. The coated substrates are useful with a wide range of toner material. Preferred toners are based on one or more of ethylene vinyl acetate (EVA) copolymer, copolymers of ethylene and α,β-ethylenically unsaturated acid selected from the group consisting of acrylic and methacrylic acids and ionomers such as the Surlyn^{®} resins of DuPont.

EP 0 789 281 describes a coating system for polypropylene in which the polypropylene is coated with polyethylene and then with ethylene-acrylic acid and minor amounts of filler such as talc or silica and wax and / or pigment. In an embodiment, the carboxylate groups of the copolymer are neutralized with metal ions from Group IA, IIa or IIb of the Period Table of Elements, specifically, sodium.

US 6,555,240 discloses a film laminate for printing comprising a polyolefin film, an ethylene-acrylic acid type copolymer resin layer formed on at least one side of the polyolefin film, and an anchor layer formed on the ethylene-acrylic acid type copolymer resin layer, the anchor layer containing an oxazoline group-modified resin. As examples of ethylene-acrylic acid type copolymers an ethylene-(meth)acrylate-(meth)acrylic acid salt copolymer, ethylene-(meth)acrylic acid ester-maleic anhydride copolymers, and ethylene-glycidyl (meth)acrylic acid ester copolymers are mentioned among others. The polyolefin film is preferably a polypropylene film.

US 2003/0203228 A1 discloses an imaging medium comprising a receptor layer and a polyvinyl chloride backing layer particularly useful in electrophotographic printing processes with liquid toners comprising thermoplastic toner particles in a liquid carrier. The receptor layer comprises in one embodiment the polymerization product of a composition comprising ethylene and monomers selected from the group consisting of vinyl acetate, vinyl acrylate, vinyl carboxylic acid and mixtures thereof, and optionally an anhydride. The receptor layer is extruded on the polyvinyl chloride backing layer.

US 6,503,989 discloses a polyolefin-based printable article having a polymer composition in at least that portion of the article intended to be printed upon comprising at least 60 % by weight of at least one polyolefin and from 0.1 to 5 % by weight of at least one polyaminoalkylene based on the weight of the at least one polyolefin, the polymer composition having been treated by means of an oxidative surface treatment.

U.S. 5,827,627 discloses a liquid toner printable thermoplastic film which is coated with an ethylene-acrylic acid copolymer based coating capable of electrostatic imaging with liquid toner. In an embodiment, the carboxylate groups of the copolymer are neutralized with metal ions from Group la, IIa or IIb of the Periodic Table of Elements, specifically, sodium.

WO 00/15424 discloses an ink-based-image-bearing substrate which includes a coextruded thermoplastic film having at least one layer made from a polymer derived from polypropylene and another layer (the print-receiving layer) made from an acidic functional group-bearing polymer. The acidic functional group bearing-polymer is preferably ethylene-acrylic acid or ethylene-methacrylic acid.

One of the problems encountered when coatings are used is the possible delamination from the substrate. It might be necessary to utilize a primer for improving the adhesion.

Moreover, the coating is supplied in general in a separate step after the manufacture of the film wherein a coating solution is used. This subsequent step implies considerable additional costs.

The object of the present invention is therefore to provide printable laminates which allow complete transfer of the ink to the film and wherein the adhesion between ink (toner images) and laminate is good Another object of the invention is to provide laminates wherein the adhesion between the base layer and the printable surface layer is improved.

The present invention thus provides a printable laminate comprising
(a) a base layer comprising at least one polymer ;
(b) a surface layer comprising an ethylene copolymer (b1) containing 1 to 50 % by weight, based on the ethylene copolymer, of one or more polar repeating units which are derived from ethylenically unsaturated monomers selected from the group consisting of carboxylic acid esters, carboxylic acids, carboxylic acid anhydrides, carboxylic acid salts, and epoxy compounds;
   and optionally
(c) an adhesive layer between the base layer (a) and the surface layer (b); wherein at least one of the layers (a), (b), (c) comprises a polymer grafted with at least one unsaturated carboxylic acid, unsaturated sulfonic acid and/or unsaturated carboxylic acid anhydride, and/or their salts.

In addition, the present invention provides a process for the production of this laminate by coextruding at least
(a) a base layer comprising at least one polymer ;
(b) a surface layer comprising an ethylene copolymer containing 1 to 50 weight %, based on the ethylene copolymer, of one or more polar repeating units which are derived from ethylenically unsaturated monomers selected from the group consisting of carboxylates, carboxylic acids, carboxylic acid anhydrides, carboxylic acid salts, and epoxy compounds ;
   and optionally
(c) an adhesive layer between the base layer (a) and the surface layer (b); wherein at least one of layers (a), (b), (c) comprises a polymer which is grafted with at least one unsaturated carboxylic acid, unsaturated sulfonic acid and/or unsaturated carboxylic acid anhydride, and/or their salts.

Moreover, the present invention provides a printing process, comprising :
providing a printable laminate as described herein, and
printing a toner image on the laminate by means of an electrophotography technique.

Preferably, the base layer (a) comprises one or more non-polar polyolefins and/or polyvinylchloride.

More preferably, the base layer (a) comprises non-polar polyolefins. It is preferred that the nonpolar polyolefins are contained in the base layer in an amount of at least 60 % by weight of the base layer (a).

In a preferred embodiment of the present invention, the printable laminate comprises
(a) a base layer comprising one or more non-polar polyolefins and/or poly vinylchloride;
(b) a surface layer comprising
   (b1) 50 to 99.5 % by weight, based on the sum of (b1) and (b2), of an ethylene copolymer containing 1 to 50 % by weight, based on the ethylene copolymer, of one or more polar repeating units which are derived from ethylenically unsaturated monomers selected from the group consisting of carboxylic acid esters, carboxylic acids, carboxylic acid anhydrides, carboxylic acid salts, and epoxy compounds;
   (b2) 0.5 % to 50 % by weight, based on the sum of (b1) and (b2), of a polyolefin which is grafted with at least one unsaturated carboxylic acid, unsaturated sulfonic acid and/or unsaturated carboxylic acid anhydride, and/or their salts.

The polyolefins as used in the laminate according to the present invention are nonpolar and include thermoplastic, crystalline polyolefin homopolymers and copolymers, preferably from monoolefin monomers having 2 to 7 carbon atoms, such as ethylene, propylene, 1-butene, isobutylene, 1-pentene, 1-hexene, 1-octene, 3 -methyl-1-pentene, 4-methyl-1-pentene, 5-methyl-1-hexene, and the like, and mixtures thereof. Preferred are however monomers having 3 to 6 carbon atoms, with propylene being most preferred. The polyolefin may contain conjugated diene monomers like 1,3-butadiene, 2-chlorobutadiene and 2-methyl-1,3-butadiene (isoprene).

The most preferred non-polar polyolefin used in the laminate according to the present invention is polypropylene. The term polypropylene includes homopolymers of propylene as well as block and/or random copolymers of polypropylene which can contain from 1 to 20 % by weight of ethylene and/or an α-olefin comonomer of 4 to 16 carbon atoms, and mixtures thereof The polypropylene can be highly crystalline isotactic or syndiotactic polypropylene.

Preferably, the polypropylene is a random polymer of ethylene and of propylene comprising 2 to 8 % by weight of ethylene. A particularly suitable polypropylene is the ethylene propylene copolymer which is obtainable under the tradename Eltex P KS001 F of Solvay. Suitable other polypropylenes are the random copolymers RD 204 CF and RD 234 CF obtainable from Borealis.

Further polyolefins which can be used in accordance with the present invention are high, low, linear-low, very low-density polyethylenes. The polyolefins mentioned above can be made by Ziegler/Natta catalyst systems or by metallocene-based (single site) catalyst systems in a manner known in the art.

The base layer (a) may comprise other polymers like for example (meth)acrylic acid esters.

The ethylene copolymer (b1) of surface layer (b) contains preferably 1 to 50 % by weight, more preferably 2 to 30 % by weight, even more preferred 3 to 25 % by weight, based on the ethylene copolymer (b1), of one or more polar repeating units which are derived from ethylenically unsaturated monomers selected from the group consisting of carboxylic acid esters, carboxylic acids, carboxylic acid anhydrides, carboxylic acid salts, and epoxy compounds.

The most preferred carboxylic acid esters used in the present invention are (meth)acrylic acid esters ((meth)acrylates). Preferably, the (meth)acrylic acid ester is selected from the group consisting of ethyl (meth)acrylic acid ester, butyl (meth) acrylic ester and glycidyl (meth) acrylic acid ester.

In a preferred embodiment of the laminate according to the present invention, the polar repeating unit is derived from carboxylic acids, carboxylic acid anhydrides, and carboxylic acid salts. The polar repeating unit is even more advantageously derived from (meth) acrylic acid, (meth)acrylic acid and/or maleic anhydride, and/or their salts.

The salts comprise in general a metallic cation selected from among groups Ia, IIa, Ib or IIb of the Periodic Table of Elements. Particularly preferred are Na, Zn and Li cations.

The copolymer (b1) is according to the invention most preferably a copolymer of (meth)acrylic acid and ethylene. The content of the (meth)acrylic acid in the copolymer (b1) is preferably 5 to 20, more preferably 8 to 15 % by weight. It is moreover preferred that 25 to 50 percent of the acid groups are neutralized and contain one or more of the aforementioned cations.

Particularly suitable copolymers (b1) are the copolymers of methacrylic acid and ethylene which are partially neutralized. Such copolymers are sold by Dupont under the tradename Surlyn^{®} or by Exxon under the tradename Iotek^{®}.

According to the present invention, at least one of the layers (a), (b), (c) comprises a polymer (b2) which is grafted with at least one unsaturated carboxylic acid, unsaturated sulfonic acid and/or unsaturated carboxylic acid anhydride. Preferably, the grafted polymer is a polyolefin.

In a preferred embodiment of the present invention, the surface layer in the laminate according to the present invention comprises (b2) 0.5 % to 50 % by weight, preferably 0.5 to 20 %, based on the sum of (b1) and (b2), of a polyolefin which is grafted with at least one unsaturated carboxylic acid, unsaturated sulfonic acid and/or unsaturated carboxylic acid anhydride.

In an even more preferred embodiment of the laminate according to the invention, the polyolefin used for the grafted polyolefin (b2) is selected from the polyolefins of layer (a).

Preferably, the grafted polymer, in particular polyolefin (b2), is grafted with an unsaturated carboxylic acid anhydride which may have been hydrolyzed and neutralized at least partially to its salt.

Grafted polyolefins which are especially suitable for the present invention are polypropylenes which are grafted with maleic acid and/or its corresponding hydrolized product succinic acid. The succinic acid is advantageously neutralized at least partially to its corresponding salt.

The grafting of the polyolefin with the at least one unsaturated carboxylic acid, unsaturated sulfonic acid and/or unsaturated carboxylic acid anhydride is in general carried out by a reaction between the polyolefin and the compound to be grafted in the presence of a radical initiator.

The grafted polymer, in particular polyolefin, of layer (b) contains preferably 0.01 to 5 % by weight, more preferably 0.02 to 3 %, most preferred 0.05 to 0.5 % by weight, based on the grafted polymer, of unsaturated carboxylic, unsaturated sulfonic acid and/or unsaturated carboxylic acid anhydride, and/or its salts.

In addition to components (b1) and (b2) the surface layer may contain further components as for example fillers (CaCO₃, SiO₂, etc.), antioxidants, antiblock agents, anti-slip agents or waxes.

Preferably, the surface layer (b) of the laminates according to the present invention contains up to 50, more preferably up to 40 and most preferably up to 30 % by weight, based upon the weight of layer (b), of the polymers of layer (a). In this embodiment, the polymers of layer (a) are in particular non-polar polyolefins.

The laminate according to the present invention comprises at least two layers. In a preferred embodiment, this laminate comprises an adhesive layer (c) between the base layer (a) and the surface layer (b). The adhesive layer serves to improve the adhesion between the base layer which preferably comprises a nonpolar polyolefin and/or PVC (a) and the surface layer (b) which is preferably coextruded.

The adhesive layer (c) preferably comprises a polymer grafted with at least one unsaturated carboxylic acid, unsaturated sulfonic acid and/or unsaturated carboxylic acid anhydride. More preferably, the adhesive layer (c) comprises a non polar polyolefin and/or a polyolefin which is grafted with at least one unsaturated carboxylic acid, unsaturated sulfonic acid and/or unsaturated carboxylic acid anhydride. Most preferably, the adhesive layer (c) comprises a polyolefin which is grafted with at least one unsaturated carboxylic acid, unsaturated sulfonic acid and/or unsaturated carboxylic acid anhydride.

The grafted polyolefin of layer (c) contains preferably 0.01 to 5 % by weight, more preferably 0.02 to 3 %, most preferred 0.05 to 0.5 % by weight, based on the grafted polyolefin, of grafted unsaturated carboxylic, unsaturated sulfonic acid and/or unsaturated carbonic acid anhydride.

The thickness of the surface layer, the base layer and the optional adhesive layer may vary broadly. It is however preferred if the surface layer has a thickness of 1 to 30 µm, more preferably 5 to 15 µm and the base layer of 20 to 300 µm, more preferably 50 to 250 µm, and most preferably 80 to 200 µm The adhesive layer has preferably a thickness of 1 to 20 µm, more preferably 5 to 10 µm.

The laminates can comprise one or more conventional additives, such as stabilizers, lubricants, antioxidants, pigments, fillers, and the like. In addition, polyalkyleneamines, in particular polyethylene imines, may be added to the layers according to the present invention.

The laminate according to the present invention is obtainable by coextrusion of the respective layers. Although several coating methods may be conceived, it is preferred that the respective layers are coextruded. In a preferred process according to the present invention, an adhesive layer (c) is accordingly coextruded between the surface layer (b) and the base layer (a).

In a preferred embodiment of the present invention, at least the outer surface of the surface layer (b) of the laminate of the invention is subjected to an oxidative treatment. This treatment contributes to an efficient uptake of the ink whose adhesion to the surface layer is improved.

The oxidative treatment can be effected for example by oxyfluorination by means of a gas mixture comprising oxygen and fluorine, by corona discharge treatment in the presence of oxygen, a treatment by means of an oxidative plasma, a treatment with ozone in the presence of ultraviolet radiation, or a flame-brushing treatment. These treatment methods can be combined.

Preferably, the oxidative surface treatment is a corona discharge treatment. The corona treatment is preferably carried out at a temperature of less than 100 °C and with a specific corona energy of 50 to 500 W.min/m². The corona treatment leads to excellent results, both for printing with dry toners and with liquid toners.

The laminates of the present invention can be used as such or are part of more complicate structures, for example packagings, or other three dimensional bodies.

The present invention provides as a preferred process for the production of the laminate according to the invention a process of coextruding at least
(a) a base layer comprising one or more non-polar polyolefins and/or poly vinylchloride; and
(b) a surface layer comprising
   (b1) 50 to 99.5 % by weight, based on the sum of (b1) and (b2), of an ethylene copolymer containing 1 to 50 weight %, based on the ethylene copolymer, of one or more polar repeating units which are derived from ethylenically unsaturated monomers selected from the group consisting of carboxylates, carboxylic acids, carboxylic acid anhydrides, carboxylic acid salts, and epoxy compounds ;
   (b2) 0.5 % to 50 % by weight, based on the sum of (b1) and (b2), of a polyolefin which is grafted with at least one unsaturated carboxylic acid, unsaturated sulfonic acid and/or unsaturated carboxylic acid anhydride, and/or their salts.

The present invention also relates to a printing process, comprising:
providing a printable laminate as described herein, and
printing a toner image on the laminate by means of an electrophotography technique.

Preferred toners to be used in the printing proces of the present invention are based on one or more of ethylene vinyl acetate (EVA) copolymers, copolymers of ethylene and α,β-ethylenically unsaturated acid selected from the group consisting of acrylic and methacrylic acid and ionomers such as are produced unter the trade name Surlyn^{®} of Dupont.

The printable laminates of the present invention depict an improved adhesion between the surface layer and the base layer, which is especially notable during printing.

If the surface layer contains a nonpolar polyolefin in addition to the ethylene copolymer (b1), the surface appearance is improved.

The invention will be explained in the following by referring to specific non-limiting Examples.

### EXAMPLES

The laminates of the examples and comparative examples were prepared by coextruding a 190 µm thick base layer, a 10 µm thick surface layer, and optionally a 5 to 10 µm thick adhesive layer. The composition of the base layer, surface layer and adhesive layer is indicated in the Table for the respective Examples and Comparative Examples. The percentages refer to the weight.

As the propylene copolymer in the base, surface and/or adhesive layers, a statistical propylene copolymer comprising 3 to 4 % by weight of ethylene (Borealis RD 204 CF or Borealis RD 234 CF, which is referred to in the following as "PP") was used.

As polyolefin (polymer (b2)) which is grafted with at least one unsaturated carboxylic acid, unsaturated sulfonic acid and/or unsaturated carboxylic acid anhydride, and/or their salts, a propylene copolymer which is grafted with 0.05 to 0.2 % maleic acid anhydride, which was hydrolyzed and neutralized by sodium, was used (viscosity about 10000 Pa.s at 0.1 rad/s), namely PRIEX 48101 of Solvay (referred to in the following as "PRI"), which is a random propylene copolymer neutralized with sodium ions was used.

The material of the adhesive layer comprises PRIEX 48101. It is noted that the use of grades 46101 or 45101, which exhibit also a viscosity around 10000 Pa.s at 0.1 rad/s but with higher molecular weight polypropylene, reveals similar results.

As the ethylene copolymer (b1), the following three polymers were used in the Examples :
An ethylene methylacrylic acid copolymer which is partly neutralised to the sodium salt (Surlyn^{®} 8920 of DuPont de Nemours ;
MFI (190°C-2,16kg)=0,9 ; Tm=88 °C; referred to in the following as "SUR").

An ethylene copolymer containing 69 % ethylene, 25 % ethylene acrylate and 6 % glycidyl methacrylate (GMA); MFI (190°C-2,16 kg)=6 Tm=60°C) (Lotader 8900, manufactured by Atofina; referred to in the following as "LOT1").

An ethylene copolymer containing 81 % ethylene, 16 % butyl acrylate and 3 % maleic acid anhydride; MFI (190°C-2,16 kg)=5 Tm=91°C) (Lotader 3410, manufactured by Atofina; to be referred to in the following as LOT2).

The polyvinylchloride used as base layer in Example 12, had the following composition (referred to in the following as "PVC") :
- polyvinylchloride, Solvin, 264 PC, (60 %),
- a plasticizer, BASF, Palamoll 652 (18 %)
- a stabilizer, Reagens, SL/71 (3 %)
- a processing aids, Rohm and Haas, K-175 (2 %)
- a white pigment, Kronos, 2220 (17 %).

The laminates of the examples and comparative examples were extruded under the following experimental conditions :

### Examples 1 to 11, Comparison Examples 1 and 2 (PP base layer)

Layer (a), i.e. the base layer, was extruded with a Battenfeld extruder (L/D = 30, D = 75mm). The screw speed was 80 rpm and the temperature profile for the five different zones was 185/255/225/220/220°C.

Layer (b), i.e. the surface layer, was extruded with a Battenfeld extruder (L/D = 30, D = 50 mm). The screw speed was 30 rpm and the temperature profile for the five different zones was 185/255/225/220/220°C.

Layer (c), i.e. the adhesive layer, was extruded with a Battenfeld extruder (L/D = 30, D = 45 mm). The screw speed was 25 rpm and the temperature profile for the five different zones was 200/255/225/220/230°C.

### Example 12 (PVC base layer)

Layer (a), i.e. the base layer, was extruded with a Battenfeld extruder (L/D) = 30, D=75mm). The screw speed was 70 rpm and the temperature profile for the five different zones was 140/180/185/185/185°C.

Layer (b), i.e. the surface layer was extruded with a Battenfeld extruder (L/D) = 30, D=50mm). The screw speed was 30 rpm and the temperature profile for the five different zones was 1800/190/200/200/200°C.

The film laminates obtained in the examples and comparative examples were extruded onto a chilled roll (30°C), cooled down to room temperature (20°C) and corona treated on the surface layer. Subsequently, the laminates were winded up.

Samples of the coextruded laminates were investigated as such with respect to the transfer of ink, adhesion and printability. Identical samples were subjected to corona treatment before evaluating the transfer of ink, adhesion and printability to investigate the effect of corona treatment.

### Corona Treatment

The laminates obtained by coextrusion as described above were subjected to corona treatment at room temperature (20°C) with a specific corona energy (SCE) of approximately 150 to 220 W.min/m².

### Test for the transfer of ink

The transfer of the ink which shows the compatibility/affinity of the substrate to the ink has been judged « perfect » (100 % transfer) if no residual ink remained on the cylinder which carried the ink after the contact with the laminate.

### Test for the adhesion of the ink

The adhesion of the ink was evaluated with the help of the norm ISO 2409. The degree of adhesion to the substrate was quantified with the aid of a scale which runs from 0 to 5 wherein 0 corresponds to a perfect adhesion and 5 corresponds to null adhesion.

### Test for the surface appearance

The surface aspect and the possible compatibilization of a component were evaluated by measuring the average roughness (Ra) on a given area. The measurements were carrried out with an interferential microscope (WYCO Corporation, type RST) on a 453µm*595µm area, with a 10.4 objective. The average values for Ra results, measured on 3 different areas, are given in the Table in nm.

### Test for the surface layer adhesion

The adhesion of the surface layer to the base or adhesive layer was assessed by carrying out the ISO 2409 test for ink for adhesion. In the case of a good adhesion of the surface layer with the layer just underneath, only ink can be removed by the tape (test result is "good" adhesion). If the adhesion of the surface layer with the adjacent layer is not good enough, a piece of the surface layer tears off and is collected on the tape (test result is "bad" adhesion).

### Test for the printability

The printability, i.e. the quality of printing, was assessed with regard to the following three factors : reproduction of thin lines, high coverage and flaking off. Reproduction of thin lines :
With regard to thin lines it was examined as to whether it is possible to distinguish by eyesight thin lines with a very thin gap between the lines (results: pass or not pass).

### High coverage :

For zones receiving a large amount of ink, it was examined as to whether bleeding occurs between zones of different colors (result: bleeding or no bleeding).

### Flaking off:

It was examined by eyesight whether there are any parts of the printing layer (surface layer) which show flakes.

The tests were carried out by printing various films by the Indigo^{®} technique (electrophotography by means of a liquid toner). The samples have been printed with industrial press ws2000, ws4000 or ws4050, supplied by Hewlett Packard (HP).

It is noted here that all examples revealed essentially identical results with respect to printability in that they passed the thin line test and the high coverage test. Moreover, there was no flaking off. Accordingly, a separate discussion of the printability test results is omitted in the following.

The following Table summarizes the compositions and characteristics of the laminates obtained as indicated above. The numbers indicated for compositions of two or more components refer to weight percentages. For each example and comparative example the characteristics were compared for the cases where corona treatment was effected or omitted. In the Table, "-" indicates that this layer was not present or that this characteristic was not measured.

The Examples clearly reveal that the printable laminates according to the present invention show improved characteristics.

**Table**

| Example No. | Base layer | Surface layer | Adhesive layer | Corona treatment | Ink transfer (%) | Ink adhesion | Rough ness (nm) | Surface layer adhesion |
|---|---|---|---|---|---|---|---|---|
| 1 | PP | SUR 95 PRI 5 | - | No | 100 | 2 | - | good |
| | | | | Yes | 100 | 0 | 151 | good |
| 2 | PP | SUR 90 PRI 5 PP 5 | - | No | 100 | 2 | - | good |
| | | | | Yes | 100 | 0 | 392 | good |
| 3 | PP | LOT1 95 PRI 5 | - | No | 100 | 2 | - | good |
| | | | | Yes | 100 | 1 | 526 | good |
| 4 | PP | LOT2 95 PRI 5 | - | No | 100 | 1 | - | good |
| | | | | Yes | 100 | 0 | 440 | good |
| 5 | PP | SUR | PRI | No | 100 | 2 | - | good |
| | | | | Yes | 100 | 0 | 125 | good |
| 6 | PP | SUR | PRI 70 PP 30 | No | 100 | 2 | - | good |
| | | | | Yes | 100 | 0 | - | good |
| 7 | PP | SUR 90 PRI 10 | - | No | 100 | 2 | - | good |
| | | | | Yes | 100 | 0 | 163 | good |
| 8 | PP | SUR 60 PRI 40 | - | No | 80 | 5 | - | good |
| | | | | Yes | 100 | 5 | 257 | good |
| 9 | PP | SUR 80 PRI 5 PP 15 | - | No | 100 | 3 | - | good |
| | | | | Yes | 100 | 1 | 578 | good |
| 10 | PP | SUR 80 PP 20 | - | No | 80 | 4 | - | good |
| | | | | Yes | 100 | 2 | 1172 | good |
| 11 | PP | LOT2 95 PP 5 | - | No | 100 | 1 | - | good |
| | | | | Yes | 100 | 1 | 657 | good |
| 12 | PVC | LOT1 95 PRI 5 | - | No | 100 | 2 | - | good |
| | | | | Yes | 100 | 1 | - | good |
| Comparative 1 | PP | - | - | No | 0 | 5 | - | - |
| | | | | Yes | 40 | 5 | 296 | - |
| Comparative 2 | PP | SUR | - | No | 100 | 2 | - | bad |
| | | | | Yes | 100 | 0 | 130 | bad |

## Claims

1. A printable laminate comprising
(a) a base layer comprising at least one polymer;
(b) a surface layer comprising an ethylene copolymer (b1) containing 1 to 50 % by weight based on the ethylene copolymer, of one or more polar repeating units which are derived from ethylenically unsaturated monomers selected from the group consisting of carboxylic acid esters, carboxylic acids, carboxylic acid anhydrides, carboxylic acid salts, and epoxy compounds ;
and optionally
(c) an adhesive layer between the base layer (a) and the surface layer (b) ;
wherein at least one of layers (a), (b), (c) comprises a polymer (b2) which is grafted with at least one unsaturated carboxylic acid, unsaturated sulfonic acid and/or unsaturated carboxylic acid anhydride, and/or their salts.

2. Printable laminate according to claim 1, wherein the base layer (a) comprises one or more non-polar polyolefins and/or polyvinylchloride.

3. Printable laminate according to claim 1 or 2, wherein the grafted polymer (b2) is a grafted polyolefin.

4. Printable laminate according to claim 3, wherein the surface layer (b) comprises
(b1) 50 to 99.5 % by weight, based on the sum of (b1) and (b2), of the ethylene copolymer containing 1 to 50 % by weight, based on the ethylene copolymer, of one or more polar repeating units which are derived from ethylenically unsaturated monomers selected from the group consisting of carboxylic acid esters, carboxylic acids, carboxylic acid anhydrides, carboxylic acid salts, and epoxy compounds; and
(b2) 0.5 % to 50 % by weight, based on the sum of (b1) and (b2), of the polyolefin which is grafted with at least one unsaturated carboxylic acid, unsaturated sulfonic acid and/or unsaturated carboxylic acid anhydride, and/or their salts.

5. Laminate according to any of claims 1 to 4, wherein the base layer (a) comprises non-polar polyolefins.

6. Laminate according to claim 5, wherein the polyolefin of the grafted polyolefin (b2) is selected from among the polyolefins of layer (a).

7. Laminate according to any of claims 1 to 6, further comprising an adhesive layer (c) between the base layer (a) and the surface layer (b).

8. Laminate according to claim 7, wherein the adhesive layer (c) comprises a polyolefin which is grafted with at least one unsaturated carboxylic acid, unsaturated sulfonic acid and/or unsaturated carboxylic acid anhydride.

9. Laminate according to any of claims 1 to 8, wherein the grafted polyolefin of surface layer (b) and / or adhesive layer (c) contains 0.01 to 5 % by weight, based on the grafted polyolefin, of unsaturated carboxylic acid, unsaturated sulfonic acid and/or unsaturated carboxylic acid anhydride.

10. Laminate according to claim 9, wherein the grafted polyolefin contains 0.02 to 3 % by weight, based on the grafted polyolefin, of unsaturated carboxylic acid, unsaturated sulfonic acid and/or unsaturated carbonic acid anhydride.

11. Laminate according to any of claims 1 to 10 wherein the grafted polymer is grafted with an unsaturated carboxylic acid anhydride.

12. Laminate according to any of claims 1 to 11, wherein the ethylene copolymer (b1)
contains 2 to 30 % by weight, based on the ethylene copolymer (b1), of the one or more polar repeating units.

13. Laminate according to any of claims 1 to 12, wherein the polar repeating unit is derived from carboxylic acids, (meth)acrylic acid esters, carboxylic acid anhydrides, and / or carboxylic acid salts.

14. Laminate according to claim 13, wherein in the polar repeating unit is derived from (meth) acrylic acid, (meth) acrylic acid and / or maleic anhydride, and/or their salts.

15. Laminate according to any of claims 1 to 14, obtainable by coextrusion.

16. Laminate according to any of claims 1 to 15, wherein the surface layer has a thickness of 1 to 30 µm and the base layer a thickness of 20 to 200 µm.

17. Laminate according to any of claims 1 to 16, wherein the outer surface of the surface layer has been corona treated.

18. Laminate according to any of claims 1 to 17, wherein the salt comprises a metallic cation selected from among groups Ia, IIa, Ib or IIb of the Periodic Table of Elements.

19. Laminate according to any of claims 1 to 18, wherein the base layer (a) comprises a polyolefin which is grafted with at least one unsaturated carboxylic acid, unsaturated sulfonic acid and/or unsaturated carboxylic acid anhydride, and/or their salts.

20. Process for the production of a laminate according to any of claims 1 to 19 by coextruding at least
(a) a base layer comprising at least one polymer;
(b) a surface layer comprising an ethylene copolymer (al) containing 1 to 50 % by weight, based on the ethylene copolymer, of one or more polar repeating units which are derived from monomers selected from the group consisting of carboxylic acid esters, carboxylic acids, carboxylic acid anhydrides, carboxylic acid salts, and epoxy compounds ;
and optionally
(c) an adhesive layer between the surface layer (b) and the base layer (a);
wherein at least one of layers (a), (b), (c) comprises a polymer grafted with at least one unsaturated carboxylic acid, unsaturated sulfonic acid and/or unsaturated carboxylic acid anhydride, and/or their salts.

21. Process according to claims 20, **characterized by** coextruding at least
(a) a base layer comprising one or more non-polar polyolefins and/or poly vinylchloride; and
(b) a surface layer comprising
(b1) 50 to 99.5 % by weight, based on the sum of (b1) and (b2), of an ethylene copolymer containing 1 to 50 % by weight, based on the ethylene copolymer, of one or more polar repeating units which are derived from monomers selected from the group consisting of carboxylic acid esters, carboxylic acids, carboxylic acid anhydrides, carboxylic acid salts, and epoxy compounds ;
(b2) 0.5 % to 50 % by weight, based on the sum of (b1) and (b2), of a polyolefin which is grafted with at least one unsaturated carboxylic acid, unsaturated sulfonic acid and/or unsaturated carboxylic acid anhydride, and/or their salts.

22. Process according to claim 20 or 21, wherein an adhesive layer (c) is coextruded between the surface layer (b) and the base layer (a).

23. Process according to any of claims 20 to 22, wherein the outer surface of the surface layer (b) is subjected to an oxidative treatment.

24. Process according to claim 23, wherein the oxidative treatment is a corona discharge treatment or a plasma treatment.

25. Printing process, comprising:
providing a printable laminate according to one of claims 1 to 19, and
printing a toner image on the laminate by means of an electrophotography technique.
